# EUROPEAN PATENT SPECIFICATION

(11) **EP 1 693 991 B1**
(45) Date of publication and mention of the grant of the patent: **08.07.2009**
(21) Application number: 06012091.2
(22) Date of filing: 03.01.2002
(51) Int. Cl.: H04L 12/28, G05B 15/00, G08C 17/02

(54) **Method and system for transmission of signals to nodes in a system**
Verfahren und System zur Übertragung von Signalen zu Knoten in einem System
Méthode et système pour la transmission des signaux aux noeuds dans un système

(43) Date of publication of application: 23.08.2006
(62) Divisional of application: 02805737.0
(73) Proprietor: Homecontrol A/S, 2970 Hørsholm (DK); Somfy SAS, 74300 Cluses (FR)
(72) Inventor: Nielsen, Martin Sandal, 6830 Nørre Nebel (DK); Sørensen, Henning, 6940 Lem (DK); Trelborg, Jakob, 6893 Hemmet (DK); Mouridsen, Erik Bundsbæk, 6900 Skjern (DK)
(74) Representative: Olesen, Kaj

(56) References cited:
- US-A- 6 026 150
- HANOVER G.: "NETWORKING THE INTELLIGENT HOME CONTROL OF HOME ELECTRONICS, FROM BURGLAR ALARMS TO WASHING MACHINES, WILL RESULT FROM A NEW COMMUNICATIONS STANDARD" IEEE SPECTRUM, IEEE INC. NEW YORK, US, vol. 26, no. 10, 1 October 1989 (1989-10-01), pages 48-49, XP000071578 ISSN: 0018-9235
- TSANG P. W. M. ET AL.: "DEVELOPMENT OF A DISTRIBUTIVE LIGHTING CONTROL SYSTEM USING LOCAL OPERATING NETWORK" IEEE TRANSACTIONS ON CONSUMER ELECTRONICS, IEEE INC. NEW YORK, US, vol. 40, no. 4, 1 November 1994 (1994-11-01), pages 879-889, XP000495826 ISSN: 0098-3063

## Description

### Field of the invention

The invention relates to a method of transmitting signals, e.g. control signals, request signals, interrogation signals etc. to a node in the form of a controllable unit associated with a device, e.g. a controllable device, measuring means, etc.

The invention further relates to a system for transmission of signals, e.g. control signals, request signals, interrogation signals etc. to a node in the form of a controllable unit associated with a device, e.g. a controllable device, measuring means, etc.

### Background of the invention

Normally, prior art systems for transmitting signals, e.g. controls signals to controllable devices such as openers for doors, gates, windows etc. have been provided in the form of wired control systems. Such systems, however, lack user friendliness because the set up is inflexible, e.g. the use of mobile remote controls will not be possible.

However, also wireless systems have been provided, e.g. using radio frequency signals, infra red signals etc, whereby enhanced user friendliness may be provided, e.g. by using wireless remote controls. However, such wireless solutions have a number of disadvantages, for example the problem that a transmitted control signal may not always be received by the intended controllable device, e.g. because of less than optimal transmission circumstances, shielding effects caused by walls and other structures, etc.

An example of a wireless remote control system is disclosed in US 6 026 150 A. This document relates to a home entertainment network system wherein a number of consumer electronic devices such as a CD player, a digital satellite system, speakers, a television set, a VCR, a PC, a telephone and a tuner are connected by means of communication bus in the form of a telephone line. These consumer electronic devices are each assigned a network address and may communicate via the telephone line via modems. A wireless receiver for receiving signals from a remote control may be comprised in the devices for facilitating a control of the devices. Further, the remote control may be used for e.g. controlling the volume of the speakers by transmitting control signals to the receiver in the speaker. In the speaker, the control signals are processed and transmitted as control information via the telephone line. Further, an address of the consumer device to be controlled is included, for example the address of a tuner. Hereby, the output volume of the tuner may be reduced/increased or the tuner may be turned on or off. Thus, if the user of the system wants to reduce the speaker volume, he/she may operate the remote control to send a "reduce-volume"-signal to the speakers. Here, the signal is received and the processing system of the speakers will send the control signal to the device, from which the speakers receive their audio signals.

It is an objective of the invention to provide a method and a system for transmission of signals as specified above, by means of which disadvantages related to these prior art systems may be avoided.

It is an objective of the invention to provide a method and a system for transmission of signals as specified above, by means of which it will be possible to integrate control systems comprising a plurality of controlled units using both wireless and wired connection.

It is a further objective to provide such a method and a system by means of which it will be possible to prioritise the operations related to the controlled units comprised in the system.

These and other objectives are achieved by the invention as explained in the following.

### Summary of the invention

As specified in claim 1, the invention relates to a method of transmitting signals to a node in the form of a controllable unit associated with a device, and wherein said controllable unit is linked to at least one further node by means of a communication bus, at least one of said nodes comprising radio frequency receiving means, said method comprising the steps of
a) transmitting a signal from a controller using radio frequency transmission means,
b) reception of said signal by at least said node comprising radio frequency receiving means,
c) detection of at least part of said signal indicating a destination node, and
d) retransmittal of said signal or part of said signal by said node comprising radio frequency receiving means to said destination node via said communication bus, whereby at least one of said nodes linked by means of said communication bus is designated as a resource master, which is adapted for keeping account of available resource(s) for said nodes linked by means of said communication bus, and which in view of said available resource(s) performs a general control of simultaneously and/or sequentially performed operations by the devices associated with said nodes.

Hereby, a number of advantages can be achieved, for example that the consumption of a scarce and/or limited resource can be controlled by the designated node. Such a resource may for example be the available power, but other types of resources may be the objects of the resource master control according to the invention. Furthermore, it will be possible to prioritise the operations related to the controlled units comprised in the system.

Preferably, the node that is designated as resource master may be selected in accordance with a predefined rule, e.g. the node having the lowest or the highest address on the subnet.

According to a still further preferred embodiment, requests from nodes on a subnet, to which nodes said devices are related, may be sent to said node designated as resource master, which may comprise means for accepting or denying said requests.

Preferably, said node designated as resource master may comprise means for aborting current operations of said nodes.

According to a further advantageous embodiment, said node designated as resource master may comprise means for valuating requests and/or current operations in view of a priority value.

Advantageously, said node designated as resource master may be configured for prioritising operations in consideration of certain resources such as available power.

According to a still further advantageous embodiment, said node designated as resource master may contain a table comprising a listing of the addresses of the nodes in a subnet and possibly other information such as rated power consumption and/or functionality of associated controlled device.

According to a preferred embodiment, the method may comprise a procedure for determining a timeslot in which said retransmittal may be performed by said node comprising radio frequency receiving means.

According to a further preferred embodiment, said procedure for determining a timeslot may comprise a random selection of a timeslot.

Advantageously, said signal may be received by at least two nodes comprising radio frequency receiving means and said retransmittal may be performed by the node for which the earliest occurring timeslot has been selected.

According to a still further embodiment, said at least part of said signal indicating a destination node may comprise an identification of the destination node, for example an address.

Preferably, said retransmittal of said received signal may be performed by means of a wired communication bus.

Advantageously, said signal may be transmitted to said node comprising radio frequency receiving means by means of a wireless remote control.

According to a further preferred embodiment, the method may further comprise transmittal of a response signal from the destination node, said response signal being transmitted via said communication bus and by means of said node having transmitted the signal to the controller having transmitted said signal, e.g. routing the response signal corresponding to the routing of said signal.

The invention also relates to a system for transmission of signals to a node in the form of a controllable unit associated with a device, wherein said controllable unit is linked to at least one further node by means of a communication bus, wherein at least one of said nodes comprises radio frequency receiving means for reception of signals transmitted from at least one controller using radio frequency transmission means comprised in the system and wherein said at least one node comprising radio frequency receiving means for reception of signals have means for retransmitting of a received signal or information comprised herein via said communication bus, wherein at least one of said nodes on a subnet linked by means of said communication bus is designated as a resource master, which comprises means for keeping account of available resource(s) for said nodes linked by means of said communication bus, and which comprises control means, which in view of said available resource(s) performs a general control of simultaneously and/or sequentially performed operations by devices associated with said nodes in the system.

Hereby, a number of advantages can be achieved, for example that the consumption of a scarce and/or limited resource can be controlled by the designated node. Such a resource may for example be the available power, but other types of resources may be the objects of the resource master control according to the invention. Furthermore, it will be possible to prioritise the operations related to the controlled units comprised in the system.

Advantageously, the node that is designated as resource master, may be selected in accordance with a predefined rule, e.g. the node having the lowest or the highest address on the subnet.

Advantageously, said control means may comprise means for accepting or denying requests from nodes on the subnet, to which nodes said devices are related.

According to a further embodiment, said control means may comprise means for aborting current operations of said nodes.

According to a still further embodiment, said control means may comprise means for valuating requests and/or current operations in view of a priority value.

According to a further advantageous embodiment, said control means may be configured for prioritising operations in consideration of certain resources such as available power.

Advantageously, said node designated as resource master may contain a table comprising a listing of the addresses of the nodes in a subnet and possibly other information such as rated power consumption and/or functionality of associated controlled device.

In a preferred embodiment, said system may comprise a plurality of said nodes in the form of controllable units, each associated with a device, and said system may comprise one or more communication buses, each defining a subnet in the system and each being linked to at least one of said nodes comprising radio frequency receiving means.

Preferably, said nodes may comprise identification means, e.g. means for storing an e.g. address, and means for identifying an identification part of a received signal.

Advantageously, said at least one node comprising radio frequency receiving means may comprise means for initiating a re-transmittal of a received signal or part hereof, e.g. in case of reception of a signal with an identification part different from the identification of the node in question.

Preferably, said at least one controller may comprise remote control means for transmission of said signals to one or more of said nodes comprised in the system.

In a further embodiment, said communication bus may comprise a communication channel operating by means of wired connections.

In a further preferred embodiment, said at least one of said nodes comprising radio frequency receiving means may comprise means for establishing and storing a table comprising identification of destination nodes linked by a communication bus, e.g. comprised in a subnet of the system.

In a still further preferred embodiment, said nodes may comprise power supply means, preferably connected to a plurality of said nodes by means of a power supply line.

Advantageously, said communication bus may comprise a communication channel operating by means of said power supply line, e.g. by means of a modulation technique, superimposing technique etc.

Further, said radio frequency receiving means may be designed as transceiver means, e.g. in order to respond to received signals.

The method according to the invention may find use for remote control of devices related to buildings, homes etc, for controlling consumption of a scarce and/or limited resource in a system and/or for controlling consumption of available power in a system.

### The figures

The invention will be explained in further detail below with reference to the figures of which
- fig. 1: shows a general overview of a system comprising a plurality of nodes and a number of subnets according to the invention,
- fig. 2: shows a general overview of a system according to a first embodiment of the invention,
- fig. 3: shows a system according to another embodiment of the invention,
- fig. 4: shows a receiver unit for use in connection with an embodiment of the invention,
- fig. 5: shows a further receiver unit for use in connection with a further embodiment of the invention, and
- fig. 6: shows a system according to a still further embodiment of the invention illustrated in a manner corresponding to figs. 2 and 3.

### Detailed description

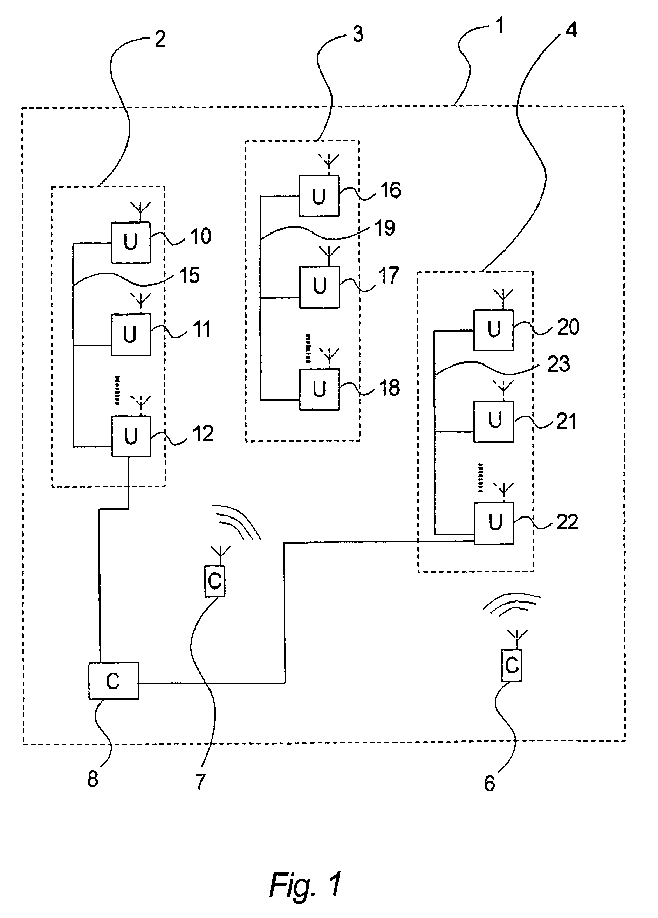

Fig. 1 shows a general overview of a system according to an embodiment of the invention. The system is generally designated 1 and comprises a plurality of units or nodes 6, 7, 8, 10, 11, 12, 16, 17, 18, 20, 21 and 22. Some of these nodes, e.g. 6, 7 and 8 are designed as controllers, e.g. control units by means of which it is possible to transmit control signals or other types of signals to one or more of the units or nodes U in the system.

The units or nodes 10, 11, 12, 16, 17, 18, 20, 21 and 22 are designed as controllable units or nodes, which are able to perform in response to a control signal or a similar form of received signal. Some or all of these units comprise radio frequency receiver/transceiver means as shown. These units or nodes are as illustrated located in subnets, e.g. 2, 3 and 4. A subnet comprises at least one unit which comprises RF receiver or transceiver means. A subnet may comprise only one node, but normally it comprises a plurality of units, e.g. at least two. The actual number of nodes or units in a subnet will depend on the actual application, the actual physical location of the involved units and/or the utilization of the units. The units which are comprised in a subnet, which will also be referred to as a powerlink arrangement, will as shown be mutually connected by means of a bus system, e.g. 15, 19 and 23, respectively. This bus system may be a wired connection by means of which the units in a subnet may communicate with each other, which will be explained further in the following.

It will be understood that a system may comprise more or less than the illustrated three subnets, e.g. one, two, four etc. subnets or powerlink arrangements.

Two of the illustrated controllers C, e.g. 6 and 7 are designed as remote control units, which are equipped with radio frequency transmitters or transceivers in order to be able to communicate with the units U equipped with RF receivers or transceivers. A system according to the invention will have to comprise at least one controller which may communicate with the units by means of RF signalling etc.

However, a system may also comprise other types of controllers C, for example a controller 8 which will be able to transmit signals to one or more of the units U by e.g. wired means, e.g. by electric signalling, by means of infra red signalling, other means of optical signalling, electromagnetic signalling etc.

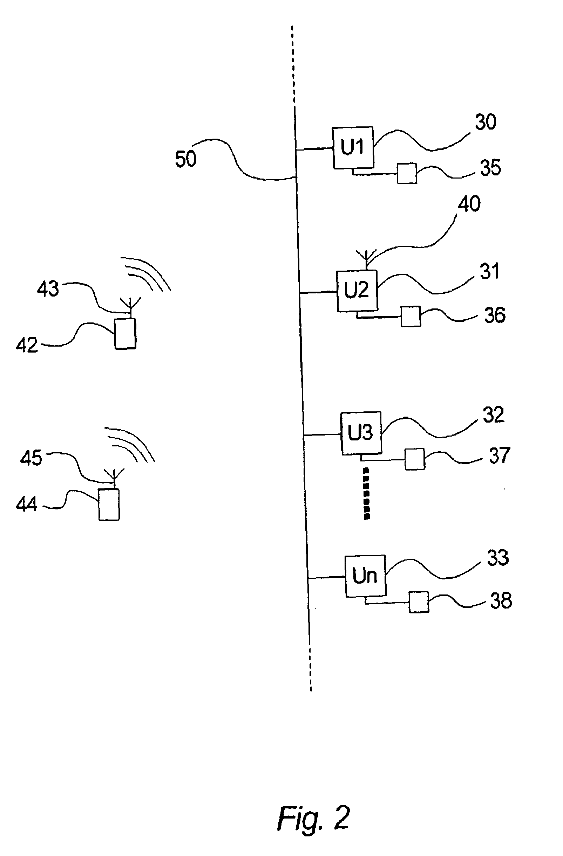

The operation of a system according to the invention will now be explained with reference to fig. 2, which illustrates (part of) a system with a subsystem having only one unit U with RF receiving/transceiving means. The system comprises a plurality of units or nodes 30, 31, 32, 33 (Ul - Un) comprising or linked to for example drive units for various devices 35, 36, 37, 38. These devices may for example be activators of various types and used in a wide variety of applications, as explained in further detail later on. The units may also or instead comprise or be linked to assorted apparatus, measuring devices, indicating devices, controllers etc. that need to receive information, control signals etc. at certain points of time. A common feature of the units 30, 31, 32, 33 is that it is necessary or advantageous to be able to send some sort of information, signal etc. to the units. Further, it may be necessary or preferable to be able to receive information or signals from the units, e.g. confirmation signals, acknowledge signals etc.

In the embodiment shown in fig. 2, the unit 31 is equipped with receiving means for radio frequency signals, e.g. including antenna means 40. Each unit comprises e.g. a motor drive unit or a control unit and is connected to a driven or controlled member 35, 36, 37, 38. It will be understood that the means driven by, controlled by etc. the unit may be integrated with the unit.

The system further comprises a node in the form of a controller, e.g. a remote control unit 42 designed for transmission of signals by means of radio frequency transmission means, e.g. including antenna means 43. This remote control unit may be used for transmitting control signals or other types of signals to one or more of the units or nodes U1 - Un in the system.

As illustrated the system may comprise at least one additional controller, e.g. a remote control 44, similar to the first remote control, e.g. designed for transmission of signals by means of radio frequency transmission means, e.g. including antenna means 45, or dissimilar to the first remote control, e.g. designed for transmission by other means such as wired means, infra red transmission means etc. as explained above.

The units 30, 31, 32, 33 are as illustrated and as explained above connected by communication means 50 which is in the form of a wired communication bus. The communication may be performed in accordance with a predefined protocol whereby the communication means 50 may serve to facilitate at least one function or service, or a combination of such functions or services, of a number of functions or services related to the operation of the system, e.g. regarding the reception and/or transmittal of signals, regarding the operation of the respective units etc. These functions or services and options thereof will be further described in the following.

When a signal is transmitted from a controller, e.g. a remote control, for example the remote control 42, the signal will in a first preferred embodiment be received by one of the units 30, 31, 32, 33 which is provided with the RF receiving means and which will be designated as a master unit, in the illustrated example the unit 31. The received signal, e.g. a frame or data packet will include information, e.g. an address, regarding the destination node, e.g. the intended unit, and the master unit 31 will determine the addressee of each received signal.

If the addressee, i.e. the destination node is the master unit itself, it will act in accordance with the information included in the received signal. If the addressee is one of the other units, e.g. the unit 33, the master unit 31 will retransmit the received signal by means of the communication channel 50 and in accordance with the protocol for the communication. Each of the other units 30 will read the signal, but only the unit addressed in the signal, e.g. the unit 33, will receive the signal and act in accordance with the payload data information, e.g. a command, included in the signal.

The master unit, e.g. the unit 31 may comprise a table containing a list of addresses of all nodes or units comprised in the system, i.e. the subnet connected by the communication bus 50. This table is established when the subsystem is powered up. If such a table is established, the master unit will be able to determine whether the destination node(s) contained in a received signal, e.g. a received frame of a message, is located in the subnet associated with the master unit in question. If this is the case, the message will be retransmitted via the communication bus 50. If not, e.g. because the destination node is comprised in another subnet associated with the system, the message will not be retransmitted. If the destination node is the unit itself, i.e. the unit which received the RF-signal, the message will not be retransmitted either. The establishment of such a table may be omitted in which case all signals will be retransmitted, whereby unnecessary retransmittals may be performed, but whereby data processing and storage may be avoided/reduced.

A signal transmitted from a remote control, e.g. 42, may be addressed to more than one of the units in the system or even to all of these. In this case the signal will as described above be received by the master unit, e.g. 31 and the destination nodes, e.g. the intended receivers will be determined by the master unit. The signal may be retransmitted to the other units in question via the communication bus 50, and the commands included in the signal may be performed by the units in question.

In a modified embodiment the master unit, e.g. the unit equipped with RF receiving/transceiving means may be able to perform a sequential operation of the commands involved in a received signal. When a signal is received, the master unit will determine the intended receivers and possibly also the type of command(s) included in the signal, e.g. possibly related to each of the intended receivers. On the basis of this information, in accordance with the protocol and possibly in accordance with other predefined rules for the operation of the system in question the master unit may retransmit the signal, e.g. transmit individual signals comprising individual addresses and corresponding commands in a sequential order and possibly with individual and/or predetermined time intervals.

Further, the transmittal of the individual control signals may as mentioned be performed in accordance with specific rules. For example, when a given first signal has been retransmitted to a first unit, the transmittal of the next signal to a second unit may be performed in dependence on a signal from the first unit, e.g. a signal confirming receipt of the first signal, confirming that the command has been performed or a signal implying that the command has not been performed. The transmittal of the next signal may then be performed, possibly after a predetermined time interval. Other rules may be defined.

Further, the operation of the system in accordance with the communication protocol may include handling of control signals emitted from two or more remote controls and/or a plurality of control signals emitted from a single remote control, for example control signals transmitted when the system is actually performing operations relating to a preceding control signal, e.g. a control signal from the same remote control or from another remote control associated with the system.

In such circumstances the master unit, e.g. the unit equipped with RF receiving/transceiving means may perform the operations in accordance with predefined rules, which may be established with regard to the actual application and the actual needs. For instance, the master unit may of course complete current operations before investigating further received signal(s) and operating in accordance with these. Instead, the master unit may determine the address(es) and control content of a subsequently received signal and may, in accordance with preestablished rules, abort some or all of the current operation(s) and initiate some or all of the operations indicated by the subsequently received signal. This may for example be the case if the subsequently received signal demands an operation to be performed which is in contradiction to a current operation, e.g. in the case of a system comprising operable windows where a current operation involves the opening of at least one window and where a subsequent signal indicates the closing of at least the same window.

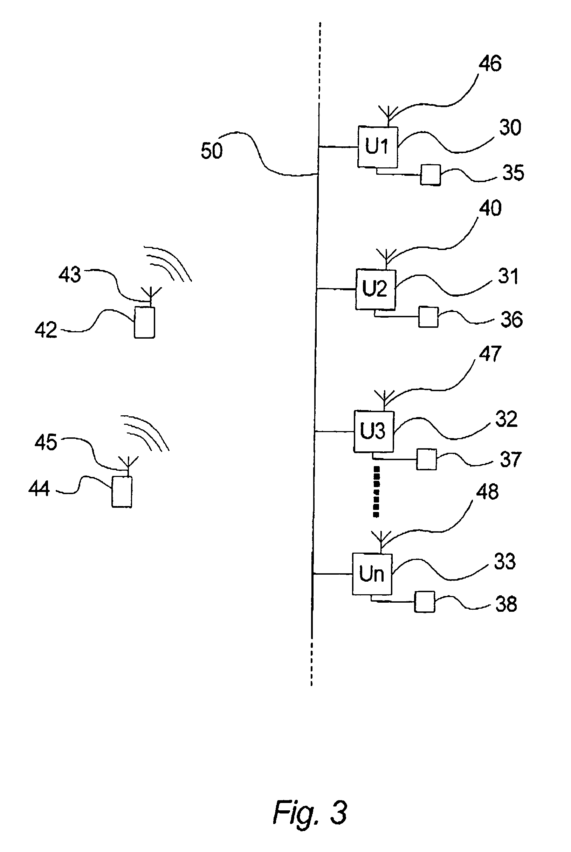

As shown in fig. 3 more than one of the units or nodes 30 - 33 in a subnet or powerlink arrangement may comprise means, e.g. including antenna means 40, 46, 47, 48 for receiving control signals from e.g. remote controls 42, 44.

In this case the involved units, e. g. the units designed for receiving RF signals and connected to the same subnet, will operate on equal terms, i.e. none of these units will be designated as a master unit per se. The units equipped with RF receiving means will serve to help each other, since a signal transmitted from a remote controller will have a larger chance of being (correctly, e.g. checked by Cyclic Redundancy Check - CRC) received by at least one of these units than if only one unit in a subnet is able to receive RF control signals. This is of particular importance when the units in a subnet is placed in locations where dampening of RF signals may occur, e.g. caused by walls or other building structures, furniture, etc. and caused by the distances between the nodes, e.g. between a controller and a unit in a subnet. In these cases the transmitted control signal may be picked up by one of the units equipped with RF receiving means, e.g. the unit closest to the remote controller or located in a "free line of sight" in relation to the remote controller. The unit that receives the signal, will as previously described determine the destination node, check the address table for the destination address and retransmit the signal, e.g. the frame or data packet, if the destination node is associated with the subnet in question and if the destination node is not the unit itself. If the unit does not comprise an address table, the signal will be retransmitted via the communication bus 50 in all cases as explained above.

If, however, more than one of the units equipped with RF receiving means, e.g. RF-nodes receive an emitted control signal correctly (e.g. checked by Cyclic Redundancy Check - CRC), these units will all be prepared to retransmit the signal. According to the invention the RF nodes that have received a signal will randomly select a timeslot. A system according to the invention may for example operate with 32 timeslots, and each of the RF-nodes that have received a signal will pick one of these. When the respective timeslots occurs, the RF-nodes in question will initiate the retransmission via the communication bus 50. The RF node that have selected the lowest, i.e. the earliest occurring timeslot, will retransmit the signal, e.g. the frame or packet The other RF-nodes (or ―node) that also have received the signal, will detect that a transmission is occurring via the communication bus and will randomly pick a new timeslot number and will try to transmit when this timeslot occurs and when the communication bus is vacant.

If two (or more) RF nodes have selected the same timeslot number, they will try to transmit simultaneously. However, the system comprises a collision detection arrangement and in such cases the transmission will be aborted. The RF nodes trying to perform a retransmission of a received signal will each randomly select a new timeslot number, and a retransmission will be performed by the node that has selected the lowest timeslot number in analogy with what has been explained above. However, in order to reduce the chance of a new collision, the number of timeslots may be enlarged, for example doubled, when the new timeslot number is selected. This procedure may be repeated if a new collision occurs.

A node which is in the process of initiating or performing a transmission of a received signal, will abort the transmission if it is detected that the signal, e.g. a frame, that is to be transmitted, is received in e.g. a receiver buffer of the node. This will occur if another node already has retransmitted the signal, e.g. the frame with the same content, and in these cases the system according to the invention will prevent that a signal, e.g. a frame or a data packet, is needlessly retransmitted (one or more times in addition to the "original" retransmission).

It will be understood that the same process, e.g. the selection of a timeslot number etc. may also be performed by a RF node which is the only RF node associated with a subnet. Thus the RF nodes may be designed similarly, irrespective of the actual use.

When a destination node on a subnet has received a signal, e.g. a frame, a response, e.g. an acknowledgement, a measured value etc. normally has to be transmitted from the destination node back to the controller, e.g. the remote control unit. This response will according to the protocol for the communication be routed along the same route as the received signal, e.g. the control signal.

This may be illustrated with reference to fig.1. Supposing that the subnet 3 contains two nodes with RF receiving means, e.g. 16 and 17, and that a control signal is transmitted from the remote controller 6 with the unit 18 as the destination node. The signal is (correctly) received by e.g. the RF node 16 and retransmitted via the communication bus 19 to the node 18. A response signal from the node 18 will be routed via the RF node 16 back to the remote controller 6. Since the control signal was received by the RF node 16 instead of the RF node 17, it may be expected that transmission between the node 16 and the controller 6 will again lead to a positive result, and thus a relatively high transmission success rate for the response signals back to the remote controllers may be expected.

The embodiment illustrated in fig. 3 will have the advantage that a control signal emitted by a remote control from a position giving inadequate reception at the position of a unit equipped with RF receiving means, e.g. 31 may be received by another unit, e.g. 31, 32, 33 instead, whereby it is assured that a system according to the described embodiment will have improved reception of control signals in cases where the remote control, or rather the remote control operated by a user, is situated far from the one or more of the units or at a place giving a reduced transmission.

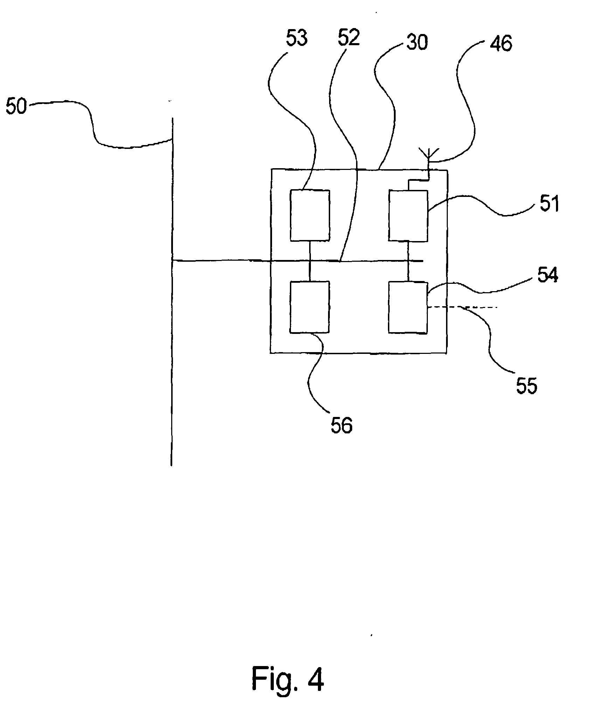

A controllable unit or node, e.g. 10, 11, 12, 16, 17, 18, 20, 21, 22 according to the invention will be described in further detail with reference to fig. 4, where a controllable unit or node is generally designated 30 and where the main parts of an embodiment of a controllable unit according to the invention are illustrated. As described above, this unit comprises antenna means 46 connected to receiver or preferably transceiver means 51 for reception of control signals. It will be understood that according to the invention wired means may be used additionally for transmitting control signals to the unit 30 if found applicable. The receiver/transceiver means 51 is connected to an internal bus 52 for connection to e.g. processor means 53, control means 54 and power supply means 56. The processor means 53 is designed and/or programmed to perform in accordance with the protocol according to the invention and in accordance with user-specified and/or application-specific conditions, including control of the communication via the communication bus 50. The control means 54 is designed to perform the required operations, e.g. control, interrogation etc. and may be connected by means of wire, wireless transmission etc. 55 to various devices (not shown in fig. 4). The power supply means 56 may be designed in various manners, which will be evident to a skilled person, e.g. as battery supply, as a mains fed transformer supply, as a local DC-power supply, e,g. a 24V power supply, as a solar cell power supply, and combinations of these and other known power supply systems. Further, it will be understood that the power supply 56 may also supply power to the control and operation of the various devices connected to the unit.

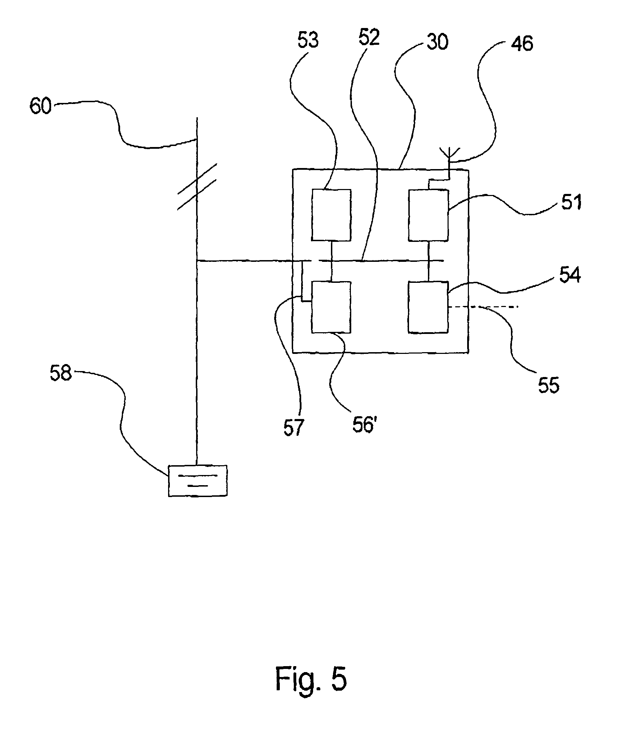

A further embodiment of the controllable unit or node according to the invention is illustrated in fig. 5. As described above, the unit comprises antenna means 46, receiver means 51, an internal bus 52, processor means 53, control means 54 and a power supply 56'. The power supply 56', however, is feed with power via a connection part 57 from a common power supply bus 60, e.g. a two-cord cable or the like, connected to a power supply unit 58 which may be common to all units or nodes in a subnet or powerlink arrangement according to the invention. This power supply bus 60 also serves as a communication bus for the communication between the controllable units or nodes comprised in a subnet or powerlink arrangement according to the invention. The communication may be performed in a number of ways, which will be obvious to a skilled person, e.g. as modulated communication, super positioned communication etc. The power supply 56' may provide the link between the unit 30 and the communication bus/power supply bus 60 via the connection part 57, thus operating as filtering means for transferring communication signals to/from the internal bus 52.

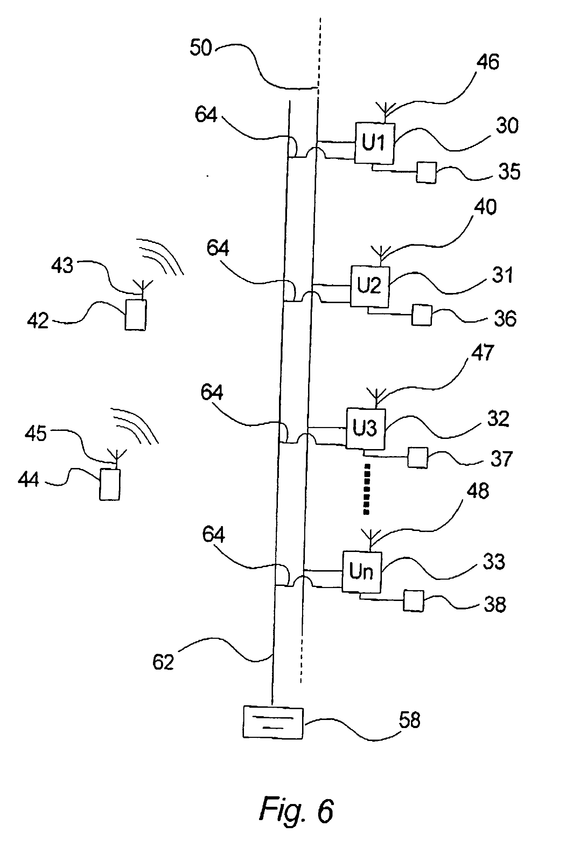

Finally, a further embodiment shall be described with reference to fig. 6, which shows a system comprising a subnet or a powerlink arrangement according to the invention in a manner corresponding to figs. 2 and 3.

Here, the communication between the controllable units 30 - 33 according to the invention is performed via a separate and designated communication bus 50, which may perform its operation by means of wired means. Further, it is shown that the power supply to units 30 - 32 and preferably also the associated devices 35 - 38 is provided by means of a central/local power supply 5 8 connected via a power supply bus 62 and connections 64 to the respective units/nodes/devices.

Further, according to an embodiment of the invention, the described method and system may be utilized for monitoring and/or controlling the power consumption and/or demand or other (limited) resources related to the operation of the system, which will be explained in further detail in the following.

The power available from e.g. the power supply unit 58 will in practise be limited, e.g. in view of peak current, rated power value etc, of the power supply unit and the wiring. Thus, it will be understood that if e.g. two electric motors providing the operative power for two of the devices 35 - 38 are operated simultaneously, the power supply and the wiring will have to be designed and rated in correspondence with this and it will be understood that savings may be achieved if such simultaneous loads can be avoided.

In accordance with an important aspect of the invention, a node on a subnet may be designated as a resource master, e.g. in order to control consumption of a scarce and/or limited resource. Such a resource may for example be the available power, cf. what has been explained above, but other types of resources may be the objects of the resource master control according to this embodiment of the invention.

The node that is designated the resource master is selected in accordance with a predefined rule, e.g. the node having the lowest or the highest address on the subnet. Other means of designating a node as resource master may be utilized which will obvious to a skilled person.

When a node on the subnet has received a command implying that an amount of the limited resource, e.g. the operating of an electric motor demanding a current of e.g. 1A, will have to be provided to the node, the node in question will have to send a request to the resource master via the communication bus. The resource master will determine the available resource, e.g. in view of other nodes using the resource at the same time or requesting to use the resource at the same time. If the demanded resource is available, the resource master will respond to the requesting node, that the required resource may be used. If the demanded amount of the resource is not available, the requesting node will be told to wait. When the required resource becomes available, the resource master will tell the requesting node that it may now initiate the operation.

However, the request from a node may also comprise a priority, whereby the resource master, if other nodes are currently using resource, e.g. power, for operations with lower priority, may abort one or more of these lower prioritized operations, thus making the required amount of the resource available to the node with the higher prioritised request. When the higher prioritised operation is completed, the resource master will indicate to the node or nodes, which had the operations aborted that they may proceed with these since the demanded power will now again be available. The priority will be related to the actual operation that the requesting node wishes to perform, and not the node itself. For example, a node requesting to use power for closing a window because a rain sensor has indicated that it is raining, may have a higher priority than a node requesting power for the operation of a window blind etc.

It will be understood that if such a power consumption control (or control of another resource) is to be performed, the system or the subnet in question will need to contain a table comprising a listing of the addresses of the units in a subnet and possibly other information, e.g. rated power consumption, functionality of associated controlled device etc. Further it will be understood that the communication bus will provide means for communicating requests, control signals and responses from the resource master and that all nodes connected to the same source of resource will be controlled by the resource master, e.g. all nodes on a subnet.

When operating the devices etc associated with the controllable units, certain security or safety aspects may be involved, for example whether a particular remote control may perform e.g. an unlocking of a door, opening of a window etc. In such circumstances, the system according to the invention may be configured to provide that the decision whether a particular device may be operated upon reception of a certain control signal from a particular controller is placed at the destination node. Thus, the security level and parameters will be determined by the set up of the controllable node operating a particular device, and the transmission and retransmission will be insensitive of such security and/or safety aspects.

The invention has been described above in general, but it will be understood that the invention may be particularly advantageous in connection with remote control of devices related to buildings, homes etc, where obstructions for a transmission of RF signals may be present. Such devices may be e.g. controlled aperture members such as operable windows, doors etc, having a member which maybe opened and closed. Further, the invention may be utilized in connection with any member associated with e.g. a window, a door or a similar aperture member of a building, where it is desired and/or advantageous to be able to operate a movable member such as a curtain, blinds etc.

It will also be understood that the invention is not limited to the particular examples described above but may be used in connection with a wide variety of applications. Further, it will be understood that the system according to the invention may be designed in a multitude of varieties within the scope of the invention as specified in the claims.

### List of references

- 1: System in general
- 2,3,4: Subnets
- 6, 7: Remote control units, controller, nodes
- 8: Control unit, controller, node
- 10,11,12,16,17,18,: Controllable units, nodes
- 20,21,22: Controllable units, nodes
- 15, 19, 23: subnet bus system
- 30, 31, 32, 33: Controllable units, nodes
- 35,36,37, 38: Controllable devices
- 40: Antenna means
- 42,44: Remote control units
- 43, 45: Antenna means
- 46, 47, 48: Antenna means
- 50: Communication bus
- 51: Receiver means
- 52: Internal bus
- 53: Processor means
- 54: Control means
- 55: Connection to controlled device
- 56: Power supply
- 56': Power supply and interface means
- 57: Connection part
- 58: Common power supply
- 60: Power supply bus/communication bus
- 62: Power supply bus
- 64: Power supply connection

## Claims

1. Method of transmitting signals to a node in the form of a controllable unit associated with a device and wherein said controllable unit is linked to at least one further node by means of a communication bus, at least one of said nodes comprising radio frequency receiving means, said method comprising the steps of
a) transmitting a signal from a controller using radio frequency transmission means,
b) reception of said signal by at least said node comprising radio frequency receiving means,
c) detection of at least part of said signal indicating a destination node, and
d) retransmittal of said signal or part of said signal by said node comprising radio frequency receiving means to said destination node via said communication bus (50), **characterized in that** at least one of said nodes (30, 31, 32, 33) linked by means of said communication bus (50) is designated as a resource master, which is adapted for keeping account of available resource(s) for said nodes (30, 31, 32, 33) linked by means of said communication bus (50), and which in view of said available resource(s) performs a general control of simultaneously and/or sequentially performed operations by devices (35, 36, 37, 38) associated with said nodes (30, 31, 32, 33).

2. Method according to claim 1, **characterized in that** the signals transmitted to a node are control signals, request signals or interrogation signals.

3. Method according to claim 1 or 2, **characterized in that** said device is a controllable device or measuring means.

4. Method according to claims 1, 2 or 3, **characterized in that** the node that is designated as resource master, is selected in accordance with a predefined rule.

5. Method according to claim 4, **characterized in that** the node that is designated as resource master, is the node having the lowest or the highest address on the subnet.

6. Method according to any of claims 1 to 5, **characterized in that** requests from nodes on a subnet, to which nodes said devices (35, 36, 37, 38) are related, are sent to said node designated as resource master, which comprises means for accepting or denying said requests.

7. Method according to one or more of claims 1 - 6, **characterized in that** said node designated as resource master comprises means for aborting current operations of said nodes (30, 31, 32, 33).

8. Method according to one or more of claims 1 - 7, **characterized in that** said node designated as resource master comprises means for valuating requests and/or current operations in view of a priority value.

9. Method according to claim 8, **characterized in that** said node designated as resource master is configured for prioritising operations in view of a priority values related to requests and/or current operations and in consideration of certain resources.

10. Method according to claim 9, **characterized in that** said certain resources comprise available power.

11. Method according to one or more of claims 1 - 10, **characterized in that** said node designated as resource master contains a table comprising a listing of the addresses of the nodes (30, 31, 32, 33) in a subnet.

12. Method according to claim 11, **characterized in that** said table contained in said node designated as resource master in addition to the addresses of the nodes (30, 31, 32, 33) comprises information regarding rated power consumption and/or functionality of the associated controlled devices.

13. System for transmission of signals to a node (30, 31, 32, 33) in the form of a controllable unit associated with a device (35, 36, 37, 38), wherein said controllable unit is linked to at least one further node (30, 31, 32, 33) by means of a communication bus (50), wherein at least one of said nodes (30, 31, 32, 33) comprises radio frequency receiving means for reception of signals transmitted from at least one controller (42, 44) using radio frequency transmission means comprised in the system and wherein said at least one node (30, 31, 32, 33) comprising radio frequency receiving means for reception of signals have means for retransmitting of a received signal or information comprised herein via said communication bus (50), **characterized in that** at least one of said nodes on a subnet (2, 3, 4) linked by means of said communication bus (50) is designated as a resource master, which comprises means for keeping account of available resource(s) for said nodes (30, 31, 32, 33) linked by means of said communication bus (50), and which comprises control means (53, 54), which in view of said available resource(s) performs a general control of simultaneously and/or sequentially performed operations by devices (35, 36, 37, 38) associated with said nodes (30, 31, 32, 33) in the system.

14. System according to claim 13, **characterized in that** the signals transmitted to a node are control signals, request signals or interrogation signals.

15. System according to claim 13 or 14, **characterized in that** said device (35, 36, 37, 38) is a controllable device or measuring means.

16. System according to claim 13, 14 or 15, **characterized in that** the node that is designated as resource master, is selected in accordance with a predefined rule.

17. System according to claim 16, **characterized in that** the node that is designated as resource master, is the node having the lowest or the highest address on the subnet.

18. System according to any of claims 13 to 17, **characterized in that** said control means comprises means for accepting or denying requests from nodes on the subnet, to which nodes said devices (35, 36, 37, 38) are related.

19. System according to any of claims 13 to 18, **characterized in that** said control means comprises means for aborting current operations of said nodes (30, 31, 32, 33).

20. System according to any of claims 13 to 19, **characterized in that** said control means comprises means for valuating requests and/or current operations in view of a priority value.

21. System according to claim 20, **characterized in that** said control means are configured for prioritising operations in view of priority values related to requests and/or current operations and in consideration of certain resources.

22. System according to claim 21, **characterized in that** said certain resources comprise available power.

23. System according to any of claims 13 to 22, **characterized in that** said node designated as resource master contains a table comprising a listing of the addresses of the nodes (30, 31, 32, 33) in a subnet.

24. System according to claim 23, **characterized in that** said table contained in said node designated as resource master in addition to the addresses of the nodes (30, 31, 32, 33) in a subnet comprises information regarding rated power consumption and/or functionality of the associated controlled devices (35, 36, 37, 38).

25. System according to any of claims 13 to 24, **characterized in that** said system comprises a plurality of said nodes (30, 31, 32, 33) in the form of controllable units, each associated with a device (35, 36, 37, 38), and that said system comprises one or more communication buses (15, 19, 23), each defining a subnet (2, 3, 4) in the system and each being linked to at least one of said nodes (30, 31, 32, 33) comprising radio frequency receiving means.

26. System according to any of claims 13 to 25, **characterized in that** said nodes (30, 31, 32, 33) comprises identification means, e.g. means for storing an e.g. address, and means for identifying an identification part of a received signal.

27. System according to claim 26, **characterized in that** said identification means comprises means for storing an address.

28. System according to any of claims 13 to 27, **characterized in that** said at least one node (30, 31, 32, 33) comprising radio frequency receiving means comprises means for initiating a re-transmittal of a received signal or part hereof in case of reception of a signal with an identification part different from the identification of the node in question.

29. System according to one or more of claims 13 to 28, **characterized in that** said at least one controller (42, 44) comprises remote control means for transmission of said signals to one or more of said nodes (30, 31, 32, 33) comprised in the system.

30. System according to one or more of claims 13 to 29, **characterized in that** said communication bus (50) comprises a communication channel operating by means of wired connections.

31. System according to one or more of claims 13 to 30, **characterized in that** said at least one of said nodes (30, 31, 32, 33) comprising radio frequency receiving means comprises means for establishing and storing a table comprising identification of destination nodes linked by a communication bus.

32. System according to one or more of claims 13 to 31, **characterized in that** said nodes (30, 31, 32,33) comprise power supply means (56, 56' 58).

33. System according to claim 32, **characterized in that** said power supply means (56, 56' 58) are connected to a plurality of said nodes by means of a power supply line (60, 62).

34. System according to claim 33, **characterized in that** said communication bus comprises a communication channel operating by means of said power supply line (60).

35. System according to claim 34, **characterized in that** said communication channel operates via said power supply line (60) by means of a modulation technique or a superimposing technique.

36. Use of a method according to one or more of claims 1 to 12 for remote control of devices related to buildings or homes.

37. Use of a method according to one or more of claims 1 to 12 for controlling consumption by devices (35, 36, 37, 38) of a scarce and/or limited resource in a system.

38. Use of a method according to one or more of claims 1 to 12 for controlling consumption by devices (35, 36, 37, 38) of available power in a system.

## Patentansprüche

1. Verfahren zum Übertragen von Signalen zu einem Knoten in der Form einer steuerbaren Einheit, die einer Vorrichtung zugeordnet ist, und wobei die steuerbare Einheit mit wenigstens einem weiteren Knoten mittels eines Kommunikationsbusses verbunden ist, wobei wenigstens einer der Knoten Funkfrequenzempfangsmittel umfasst, wobei das Verfahren die folgenden Schritte umfasst
a) Übertragen eines Signals von einem Controller unter Verwendung von Funkfrequenzübertragungsmitteln,
b) Empfang des Signals durch wenigstens den Knoten, der Funkfrequenzempfangsmittel umfasst,
c) Detektierung wenigstens eines Teils des Signals, das einen Zielknoten angibt, und
d) erneute Übertragung des Signals oder eines Teils des Signals durch den Knoten, der Funkfrequenzempfangsmittel umfasst, zum Zielknoten über den Kommunikationsbus (50), **dadurch gekennzeichnet, dass** wenigstens einer der Knoten (30, 31, 32, 33), der mittels des Kommunikationsbusses (50) verbunden ist, als ein Ressourcenmaster vorgesehen ist, der ausgelegt ist, um über (eine) verfügbare Ressource(n) für die Knoten (30, 31, 32, 33), die mittels des Kommunikationsbusses (50) verbunden sind, Buch zu führen, und der im Hinblick auf die verfügbare(n) Ressource(n) eine allgemeine Steuerung gleichzeitig und/oder nacheinander durchgeführter Operationen durch Vorrichtungen (35, 36, 37, 38) durchführt, die den Knoten (30, 31, 32, 33) zugeordnet sind.

2. Verfahren gemäß Anspruch 1, **dadurch gekennzeichnet, dass** die zu einem Knoten übertragenen Signale Steuersignale, Anforderungssignale oder Abfragesignale sind.

3. Verfahren gemäß einem der Ansprüche 1 oder 2, **dadurch gekennzeichnet, dass** die Vorrichtung eine steuerbare Vorrichtung oder ein Messmittel ist.

4. Verfahren gemäß Anspruch 1, 2 oder 3, **dadurch gekennzeichnet, dass** der Knoten, der als Ressourcenmaster vorgesehen ist, gemäß einer vordefinierten Regel ausgewählt wird.

5. Verfahren gemäß Anspruch 4, **dadurch gekennzeichnet, dass** der Knoten, der als Ressourcenmaster vorgesehen ist, der Knoten ist, der die niedrigste oder die höchste Adresse auf dem Subnetz aufweist.

6. Verfahren gemäß einem der Ansprüche 1 bis 5, **dadurch gekennzeichnet, dass** Anforderungen von Knoten auf einem Subnetz, auf dessen Knoten sich die Vorrichtungen (35, 36, 37, 38) beziehen, zu dem Knoten gesendet werden, der als Ressourcenmaster vorgesehen ist, der Mittel zum Annehmen oder Ablehnen der Anforderungen umfasst.

7. Verfahren gemäß einem der oder mehreren der Ansprüche 1 - 6, **dadurch gekennzeichnet, dass** der Knoten, der als Ressourcenmaster vorgesehen ist, Mittel zum Abbrechen laufender Operationen der Knoten (30, 31, 32, 33) umfasst.

8. Verfahren gemäß einem oder mehreren der Ansprüche 1 - 7, **dadurch gekennzeichnet, dass** der Knoten, der als Ressourcenmaster vorgesehen ist, Mittel zum Einschätzen von Anforderungen und/oder laufender Operationen im Hinblick auf einen Prioritätswert umfasst.

9. Verfahren gemäß Anspruch 8, **dadurch gekennzeichnet, dass** der Knoten, der als Ressourcenmaster vorgesehen ist, konfiguriert ist, um Operationen im Hinblick auf Prioritätswerte zu priorisieren, die sich auf Anforderungen und/oder laufende Operationen beziehen, und in Anbetracht bestimmter Ressourcen.

10. Verfahren gemäß Anspruch 9, **dadurch gekennzeichnet, dass** bestimmte Ressourcen verfügbare elektrische Energie umfassen.

11. Verfahren gemäß einem oder mehreren der Ansprüche 1 - 10, **dadurch gekennzeichnet, dass** der Knoten, der als Ressourcenmaster vorgesehen ist, eine Tabelle enthält, die eine Auflistung der Adressen der Knoten (30, 31, 32, 33) in einem Subnetz umfasst.

12. Verfahren gemäß Anspruch 11, **dadurch gekennzeichnet, dass** die Tabelle, die in dem Knoten enthalten ist, der als Ressourcenmaster vorgesehen ist, zusätzlich zu den Adressen der Knoten (30, 31, 32, 33) Information bezüglich eines geschätzten Stromverbrauchs und/oder einer Funktionalität der zugeordneten gesteuerten Vorrichtungen umfasst.

13. System zur Übertragung von Signalen zu einem Knoten (30, 31, 32, 33) in der Form einer steuerbaren Einheit, die einer Vorrichtung (35, 36, 37, 38) zugeordnet ist, wobei die steuerbare Einheit mit wenigstens einem weiteren Knoten (30, 31, 32, 33) mittels eines Kommunikationsbusses (50) verbunden ist, wobei wenigstens einer der Knoten (30, 31, 32, 33) Funkfrequenzempfangsmittel zum Empfang von Signalen umfasst, die von wenigstens einem Controller (42, 44) unter Verwendung von in dem System umfassten Funkfrequenzübertragungsmitteln übertragen werden, und wobei der wenigstens eine Knoten (30, 31, 32, 33), der ein Funkfrequenzempfangsmittel zum Empfang von Signalen aufweist, Mittel zum erneuten Übertragen eines empfangenen Signals oder hierin umfasster Information über den Kommunikationsbus (50) aufweist, **dadurch gekennzeichnet, dass** wenigstens einer der Knoten auf einem Subnetz (2, 3, 4), das mittels des Kommunikationsbusses (50) verbunden ist, als ein Ressourcenmaster vorgesehen ist, der Mittel zum Buchhalten (einer) verfügbarerl-n Ressource(n) für die Knoten (30, 31, 32, 33) umfasst, die mittels des Kommunikationsbusses (50) verbunden sind, und der ein Steuermittel (53, 54) umfasst, das im Hinblick auf die verfügbare(n) Ressource(n) eine allgemeine Steuerung gleichzeitig und/oder nacheinander durchgeführter Operationen durch Vorrichtungen (35, 36, 37, 38) durchführt, die den Knoten (30, 31, 32, 33) in dem System zugeordnet sind.

14. System gemäß Anspruch 13, **dadurch gekennzeichnet, dass** die zu einem Knoten übertragenen Signale Steuersignale, Anforderungssignale oder Abfragesignale sind.

15. System gemäß Anspruch 13 oder 14, **dadurch gekennzeichnet, dass** die Vorrichtung (35, 36, 37, 38) eine steuerbare Vorrichtung oder ein Messmittel ist.

16. System gemäß Anspruch 13, 14 oder 15, **dadurch gekennzeichnet, dass** der Knoten, der als Ressourcenmaster vorgesehen ist, gemäß einer vordefinierten Regel ausgewählt ist.

17. System gemäß Anspruch 16, **dadurch gekennzeichnet, dass** der Knoten, der als Ressourcenmaster vorgesehen ist, der Knoten ist, der die niedrigste oder die höchste Adresse auf dem Subnetz aufweist.

18. System gemäß einem der Ansprüche 13 bis 17, **dadurch gekennzeichnet, dass** das Steuermittel ein Mittel zum Annehmen oder Ablehnen von Anforderungen von Knoten auf dem Subnetz umfasst, auf dessen Knoten sich die Vorrichtungen (35, 36, 37, 38) beziehen.

19. System gemäß einem der Ansprüche 13 bis 18, **dadurch gekennzeichnet, dass** das Steuermittel ein Mittel zum Abbrechen laufender Operationen der Knoten (30, 31, 32, 33) umfasst.

20. System gemäß einem der Ansprüche 13 bis 19, **dadurch gekennzeichnet, dass** das Steuermittel Mittel zum Einschätzen von Anforderungen und/oder laufender Operationen im Hinblick auf einen Prioritätswert umfasst.

21. System gemäß Anspruch 20, **dadurch gekennzeichnet, dass** die Steuermittel konfiguriert sind zum Priorisieren von Operationen im Hinblick auf Prioritätswerte, die sich auf Anforderungen und/oder laufende Operationen beziehen, und in Anbetracht bestimmter Ressourcen.

22. System gemäß Anspruch 21, **dadurch gekennzeichnet, dass** die bestimmten Ressourcen verfügbare elektrische Energie umfassen.

23. System gemäß einem der Ansprüche 13 bis 22, **dadurch gekennzeichnet, dass** der Knoten, der als Ressourcenmaster vorgesehen ist, eine Tabelle enthält, die eine Auflistung der Adressen der Knoten (30, 31, 32, 33) in einem Subnetz umfasst.

24. System gemäß Anspruch 23, **dadurch gekennzeichnet, dass** die Tabelle, die in dem Knoten enthalten ist, der als Ressourcenmaster vorgesehen ist, zusätzlich zu den Adressen der Knoten (30, 31, 32, 33) in einem Subnetz Information bezüglich geschätztem Stromverbrauch und/oder einer Funktionalität der zugeordneten gesteuerten Vorrichtungen (35, 36, 37, 38) umfasst.

25. System gemäß einem der Ansprüche 13 bis 24, **dadurch gekennzeichnet, dass** das System eine Vielzahl der Knoten (30, 31, 32, 33) in der Form steuerbarer Einheiten umfasst, von denen jede einer Vorrichtung (35, 36, 37,38) zugeordnet ist, und dass das System einen oder mehrere Kommunikationsbusse (15, 19, 23) umfasst, von denen jeder ein Subnetz (2, 3, 4) in dem System festlegt und jeder mit wenigstens einem der Knoten (30, 31, 32, 33) verbunden ist, der Funkfrequenzempfangsmittel umfasst.

26. System gemäß einem der Ansprüche 13 bis 25, **dadurch gekennzeichnet, dass** die Knoten (30, 31, 32, 33) ein Identifikationsmittel, z.B. ein Mittel zum Speichern z.B. einer Adresse, und ein Mittel zum Identifizieren eines Identifikationsteils eines empfangenen Signals umfassen.

27. System gemäß Anspruch 26, **dadurch gekennzeichnet, dass** das Identifikationsmittel Mittel zum Speichern einer Adresse umfasst.

28. System gemäß einem der Ansprüche 13 bis 27, **dadurch gekennzeichnet, dass** der wenigstens eine Knoten (30, 31, 32, 33), der Funkfrequenzempfangsmittel umfasst, ein Mittel umfasst zum Initiierten einer erneuten Übertragung eines empfangenen Signals oder eines Teils hiervon im Falle eines Empfangs eines Signals mit einem Identifikationsteil, der von der Identifikation des fraglichen Knotens verschieden ist.

29. System gemäß einem oder mehreren der Ansprüche 13 bis 28, **dadurch gekennzeichnet, dass** der wenigstens eine Controller (42, 44) Fernsteuerungsmittel umfasst zur Übertragung der Signale zu einem oder mehreren der Knoten (30, 31, 32, 33), die in dem System umfasst sind.

30. System gemäß einem oder mehreren der Ansprüche 13 bis 29, **dadurch gekennzeichnet, dass** der Kommunikationsbus (50) einen Kommunikationskanal umfasst, der mittels verdrahteter Verbindungen arbeitet.

31. System gemäß einem oder mehreren der Ansprüche 13 bis 30, **dadurch gekennzeichnet, dass** der wenigstens eine der Knoten (30, 31, 32, 33), der Funkfrequenzempfangsmittel umfasst, Mittel umfasst zum Ermitteln und Speichern einer Tabelle, die eine Identifikation von Zielknoten umfasst, die durch einen Kommunikationsbus verbunden sind.

32. System gemäß einem oder mehreren der Ansprüche 13 bis 31, **dadurch gekennzeichnet, dass** die Knoten (30, 31, 32, 33) Stromversorgungsmittel (56, 56', 58) umfassen.

33. System gemäß Anspruch 32, **dadurch gekennzeichnet, dass** die Stromversorgungsmittel (56, 56', 58) mit einer Vielzahl der Knoten mittels einer Stromversorgungsleitung (60, 62) in Verbindung stehen.

34. System gemäß Anspruch 33, **dadurch gekennzeichnet, dass** der Kommunikationsbus einen Kommunikationskanal umfasst, der mittels der Stromversorgungsleitung (60) arbeitet.

35. System gemäß Anspruch 34, **dadurch gekennzeichnet, dass** der Kommunikationskanal über die Stromversorgungsleitung (60) mittels einer Modulationstechnik oder einer Überlagerungstechnik arbeitet.

36. Verwendung eines Verfahrens gemäß einem oder mehreren der Ansprüche 1 bis 12 zur Fernsteuerung von Vorrichtungen, die sich auf Gebäude oder Wohnhäuser beziehen.

37. Verwendung eines Verfahrens gemäß einem oder mehreren der Ansprüche 1 bis 12 zum Steuern eines Verbrauchs durch Vorrichtungen (35, 36, 37, 38) einer knappen und/oder begrenzten Ressource in einem System.

38. Verwendung eines Verfahrens gemäß einem oder mehreren der Ansprüche 1 bis 12 zum Steuern eines Verbrauchs verfügbarer elektrischer Energie durch Vorrichtungen (35, 36, 37, 38) in einem System.

## Revendications

1. Procédé de transmission de signaux à un noeud sous la forme d'une unité pouvant être commandée associée à un dispositif et dans lequel ladite unité pouvant être commandée est liée à au moins un autre noeud au moyen d'un bus de communication, au moins l'un desdits noeud comprenant des moyens de réception de radiofréquence, ledit procédé comprenant les étapes consistant à :
a) transmettre un signal d'un contrôleur en utilisant des moyens de transmission de radiofréquence,
b) recevoir ledit signal par au moins ledit noeud comprenant des moyens de réception de radiofréquence,
c) détecter au moins une partie dudit signal indiquant un noeud de destination, et
d) retransmettre ledit signal ou une partie dudit signal par ledit noeud comprenant des moyens de réception de radiofréquence audit noeud de destination par l'intermédiaire du bus de communication (50), **caractérisée en ce qu'**au moins l'un desdits noeuds (30, 31, 32, 33) liés au moyen dudit bus de communication (50) est désigné en tant que maître de ressources, qui est apte à comptabiliser la ou les ressources disponibles pour lesdits noeuds (30, 31, 32, 33) liés au moyen dudit bus de communication (50), et qui en fonction de ladite ressource ou desdites ressources disponibles effectue une commande générale des opérations effectuées simultanément et/ou séquentiellement par des dispositifs (35, 36, 37, 38) associés auxdits noeuds (30, 31, 32, 33).

2. Procédé selon la revendication 1, **caractérisé en ce que** les signaux transmis à un noeud sont des signaux de commande, des signaux de demande ou des signaux d'interrogation.

3. Procédé selon la revendication 1 ou 2, **caractérisé en ce que** ledit dispositif est un dispositif pouvant être commandé ou un moyen de mesure.

4. Procédé selon la revendication 1, 2 ou 3, **caractérisé en ce que** le noeud qui est désigné en tant que maître de ressources est sélectionné en fonction d'une règle prédéfinie.

5. Procédé selon la revendication 4, **caractérisé en ce que** le noeud qui est désigné en tant que maître de ressources est le noeud ayant l'adresse la plus basse ou la plus haute sur le sous-réseau.

6. Procédé selon l'une quelconque des revendications 1 à 5, **caractérisé en ce que** des demandes de noeuds sur un sous-réseau, lesdits dispositifs (35, 36, 37, 38) étant associés auxdits noeuds, sont envoyées audit noeud désigné en tant que maître de ressources, qui comprend des moyens pour accepter ou refuser lesdites demandes.

7. Procédé selon une ou plusieurs des revendications 1 à 6, **caractérisé en ce que** ledit noeud désigné en tant que maître de ressources comprend des moyens pour abandonner les opérations actuelles desdits noeuds (30, 31, 32, 33).

8. Procédé selon une ou plusieurs des revendications 1 à 7, **caractérisé en ce que** ledit noeud désigné en tant que maître de ressources comprend des moyens pour évaluer les demandes et/ou les opérations actuelles en fonction d'une valeur de priorité.

9. Procédé selon la revendication 8, **caractérisé en ce que** ledit noeud désigné en tant que maître de ressources est configuré pour prioritiser les opérations en fonction d'une valeur de priorité associée à des demandes et/ou des opérations actuelles et en tenant compte de certaines ressources.

10. Procédé selon la revendication 9, **caractérisé en ce que** lesdites certaines ressources comprennent une énergie disponible.

11. Procédé selon une ou plusieurs des revendications 1 à 10, **caractérisé en ce que** ledit noeud désigné en tant que maître de ressources contient une table comprenant un listing des adresses des noeuds (30, 31, 32, 33) dans un sous-réseau.

12. Procédé selon la revendication 11, **caractérisé en ce que** ladite table contenue dans ledit noeud désigné en tant que maître de ressources en plus des adresses des noeuds (30, 31, 32, 33) comprend des informations concernant la consommation d'énergie nominale et/ou des fonctionnalités des dispositifs commandés associés.

13. Système de transmission de signaux à un noeud (30, 31, 32, 33) sous la forme d'une unité pouvant être commandée associée à un dispositif (35, 36, 37, 38), dans lequel ladite unité pouvant être commandée est liée à au moins un autre noeud (30, 31, 32, 33) au moyen d'un bus de communication (50), dans lequel au moins l'un desdits noeuds (30, 31, 32, 33) comprend des moyens de réception de radiofréquence pour recevoir des signaux transmis d'au moins un contrôleur (42, 44) en utilisant des moyens de transmission de radiofréquence compris dans le système, et dans lequel ledit au moins un noeud (30, 31, 32, 33) comprenant des moyens de réception de radiofréquence pour la réception de signaux a des moyens pour retransmettre un signal reçu ou des informations comprises dans celui-ci par le biais dudit bus de communication (50), **caractérisé en ce qu'**au moins l'un desdits noeuds sur un sous-réseau (2, 3, 4) liés au moyen dudit bus de communication (50) est désigné en tant que maître de ressources, qui comprend des moyens pour comptabiliser la ou les ressources disponibles pour lesdits noeuds (30, 31, 32, 33) liés au moyen dudit bus de communication (50), et qui comprend des moyens de commande (53, 54), qui en fonction de ladite ressource ou desdites ressources disponibles effectue une commande générale des opérations effectuées simultanément et/ou séquentiellement par des dispositifs (35, 36, 37, 38) associés auxdits noeuds (30, 31, 32, 33) dans le système.

14. Système selon la revendication 13, **caractérisé en ce que** les signaux transmis à un noeud sont des signaux de commande, des signaux de demande ou des signaux d'interrogation.

15. Système selon la revendication 13 ou 14, **caractérisé en ce que** ledit dispositif (35, 36, 37, 38) est un dispositif pouvant être commandé ou un moyen de mesure.

16. Système selon la revendication 13, 14 ou 15, **caractérisé en ce que** le noeud qui est désigné en tant que maître de ressources est sélectionné en fonction d'une règle prédéfinie.

17. Système selon la revendication 16, **caractérisé en ce que** le noeud qui est désigné en tant que maître de ressources est le noeud ayant l'adresse la plus basse ou la plus haute sur le sous-réseau.

18. Système selon l'une quelconque des revendications 13 à 17, **caractérisé en ce que** lesdits moyens de commande comprennent des moyens pour accepter ou refuser des demandes de noeuds sur le sous-réseau, lesdits dispositifs (35, 36, 37, 38) étant associés auxdits noeuds.

19. Système selon une ou plusieurs des revendications 13 à 18, **caractérisé en ce que** lesdits moyens de commande comprennent des moyens pour abandonner les opérations actuelles desdits noeuds (30, 31, 32, 33).

20. Système selon une ou plusieurs des revendications 13 à 19, **caractérisé en ce que** lesdits moyens de commande comprennent des moyens pour évaluer les demandes et/ou les opérations actuelles en fonction d'une valeur de priorité.

21. Système selon la revendication 20, **caractérisé en ce que** lesdits moyens de commande sont configurés pour prioritiser les opérations en fonction de valeurs de priorité associées à des demandes et/ou des opérations actuelles et en tenant compte de certaines ressources.

22. Système selon la revendication 21, **caractérisé en ce que** lesdites certaines ressources comprennent une énergie disponible.

23. Système selon l'une quelconque des revendications 13 à 22, **caractérisé en ce que** ledit noeud désigné en tant que maître de ressources contient une table comprenant un listing des adresses des noeuds (30, 31, 32, 33) dans un sous-réseau.

24. Système selon la revendication 23, **caractérisé en ce que** ladite table contenue dans ledit noeud désigné en tant que maître de ressources en plus des adresses des noeuds (30, 31, 32, 33) dans un sous-réseau comprend des informations concernant la consommation d'énergie nominale et/ou des fonctionnalités des dispositifs commandés associés (35, 36, 37, 38).

25. Système selon l'une quelconque des revendications 13 à 24, **caractérisé en ce que** ledit système comprend une pluralité desdits noeuds (30, 31, 32, 33) sous la forme d'unités pouvant être commandées, chacune étant associée à un dispositif (35, 36, 37, 38), et **en ce que** ledit système comprend un ou plusieurs bus de communication (15, 19, 23), définissant chacun un sous-réseau (2, 3, 4) dans le système et chacun étant lié à au moins l'un desdits noeuds (30, 31, 32, 33) comprenant des moyens de réception de radiofréquence.

26. Système selon l'une quelconque des revendications 13 à 25, **caractérisé en ce que** lesdits noeuds (30, 31, 32, 33) comprennent des moyens d'identification, par exemple des moyens pour mémoriser par exemple une adresse, et des moyens pour identifier une partie d'identification d'un signal reçu.

27. Système selon la revendication 26, **caractérisé en ce que** lesdits moyens d'identification comprennent des moyens pour mémoriser une adresse.

28. Système selon l'une quelconque des revendications 13 à 27, **caractérisé en ce que** ledit au moins un noeud (30, 31, 32, 33) comprenant des moyens de réception de radiofréquence comprend des moyens pour lancer une retransmission d'un signal reçu ou d'une partie de celui-ci en cas de réception d'un signal avec une partie d'identification différente de l'identification du noeud en question.

29. Système selon une ou plusieurs des revendications 13 à 28, **caractérisé en ce que** ledit au moins un contrôleur (42, 44) comprend des moyens de télécommande pour la transmission desdits signaux à un ou plusieurs desdits noeud (30, 31, 32, 33) compris dans le système.

30. Système selon une ou plusieurs des revendications 13 à 29, **caractérisé en ce que** ledit bus de communication (50) comprend un canal de communication fonctionnant au moyen de connexions câblées.

31. Système selon une ou plusieurs des revendications 13 à 30, **caractérisé en ce que** ledit au moins un desdits noeuds (30, 31, 32, 33) comprenant des moyens de réception de radiofréquence comprend des moyens pour établir et mémoriser une table comprenant l'identification de noeuds de destination liés par un bus de communication,

32. Système selon une ou plusieurs des revendications 13 à 31, **caractérisé en ce que** lesdits noeuds (30, 31, 32, 33) comprennent des moyens d'alimentation d'énergie (56, 56', 58).

33. Système selon la revendication 32, **caractérisé en ce que** lesdits moyens d'alimentation d'énergie (56, 56', 58) sont connectés à une pluralité desdits noeuds au moyen d'une ligne d'alimentation d'énergie (60, 62).

34. Système selon la revendication 33, **caractérisé en ce que** ledit bus de communication comprend un canal de communication fonctionnant au moyen de ladite ligne d'alimentation d'énergie (60).

35. Système selon la revendication 34, **caractérisé en ce que** ledit canal de communication fonctionne par le biais de ladite ligne d'alimentation d'énergie (60) au moyen d'une technique de modulation ou d'une technique de superposition.

36. Utilisation d'un procédé selon une ou plusieurs des revendications 1 à 12 pour commander à distance des dispositifs associés à des immeubles ou des maisons.

37. Utilisation d'un procédé selon une ou plusieurs des revendications 1 à 12 pour commander la consommation par des dispositifs (35, 36, 37, 38) d'une ressource peu abondante et/ou limitée dans un système.

38. Utilisation d'un procédé selon une ou plusieurs des revendications 1 à 12 pour commander la consommation par des dispositifs (35, 36, 37, 38) d'une énergie disponible dans un système.
